# EUROPÄISCHE PATENTSCHRIFT

(11) **EP 0 757 426 B1**
(45) Veröffentlichungstag und Bekanntmachung des Hinweises auf die Patenterteilung: **23.10.2002**
(21) Anmeldenummer: 96112249.6
(22) Anmeldetag: 30.07.1996
(51) Int. Cl.: H02K 19/10, H02K 29/08

(54) **Elektronisch kommutierter Elektromotor**
Electronically commutated electric motor
Moteur électrique commuté électroniquement

(30) Priorität: 31.07.1995 DE 19527982
(43) Veröffentlichungstag der Anmeldung: 05.02.1997
(73) Patentinhaber: FHP Motors GmbH, 26133 Oldenburg (DE)
(72) Erfinder: Willers, Frank, 26125 Oldenburg (DE)
(74) Vertreter: Jabbusch, Wolfgang, Dr.Jur.

(56) Entgegenhaltungen:
- DE-A- 3 240 580
- DE-A- 3 404 523
- DE-U- 9 302 758

## Beschreibung

Die Erfindung betrifft einen elektronisch kommutierten Elektromotor, insbesondere einen geschalteten Reluktanzmotor der im Oberbegriff des Patentanspruchs 1 angegebenen Art.

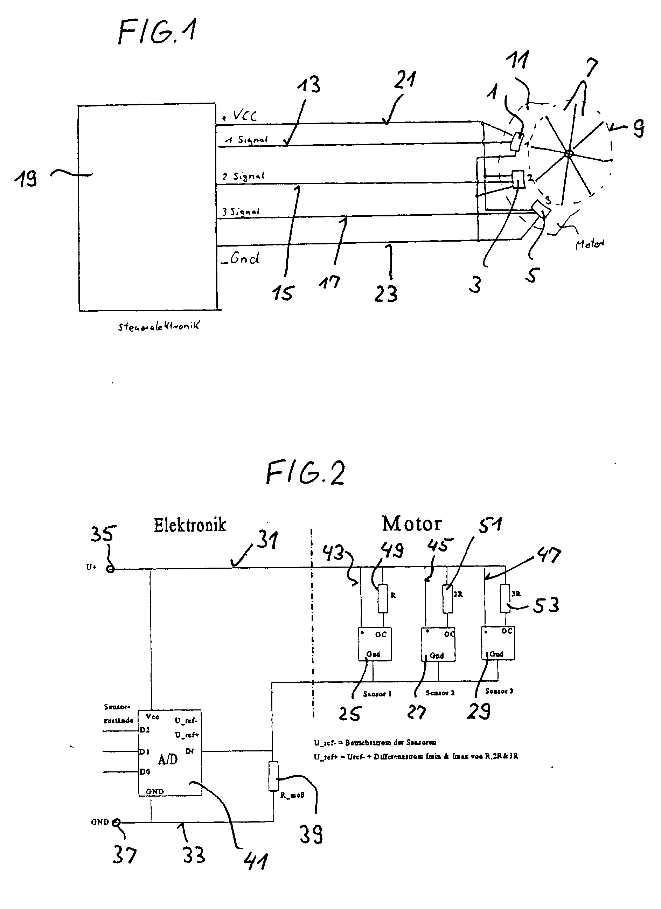

Es sind bereits geschaltete Reluktanzmotoren und kommutatorlose Gleichstrommotoren mit einer Vorrichtung zur Rotorlage-, Drehzahl- und /oder Drehrichtungserfassung bekannt, wobei am Ständer des Motors mindestens ein magnetfeld sensitiver Sensor zur Erfassung des magnetischen Flusses vorgesehen ist. So sind gemäß Figur 1 drei Sensoren 1,3,5 vorgesehen, die Permanentmagnete 7 eines Rotors 9 abfühlen. Die Sensoren 1,3,5 sind in einem Stator 11 ortsfest angebracht und erzeugen zur Kommutierungsumschaltung drei Sensorsignale, welche einzeln über Leitungen 13,15, 17 zur Steuerelektronik 19 geführt werden. Hierbei sind neben den Versorgungsleitugen 21,23 noch die drei Signalleitugen 13,15,17 erforderlich, wodurch der Verdrahtungsaufwand für den Elektromotor recht aufwendig wird.

Durch DE-A-3 240 580 ist, zum Beispiel, eine solche Anordnung bekannt.

Der Erfindung liegt die Aufgabe zugrunde, einen elektronisch kommutierten Elektromotor mit einem geringen Verdrahtungs- und damit Montageaufwand zu schaffen. Diese Aufgabe wird durch die im Patentanspruch 1 gekennzeichneten Merkmale gelöst.

Die Anzahl der Leitungen bei einem elektronisch kommutierten Elektromotor wird dadurch reduziert, daß die Sensorsignale über die Versorgungsleitungen der Sensoren übertragen werden. Durch die zusätzliche Reduzierung des Montageaufwandes wird die Herstellung eines kostengünstigen elektronisch kommutierten Elektromotors gewährleistet.

Weitere vorteilhafte Ausgestaltungen des Erfindungsgegenstandes sind den weiteren Unteransprüchen zu entnehmen. Die Erfindung wird anhand eines Ausführungsbeispieles im folgenden näher beschrieben. Es zeigen:
- Figur 1: eine schematische Darstellung einer Erfassungsvorrichtung für die Rotorlage gemäß dem Stand der Technik und
- Figur 2: ein Blockschaltbild einer erfindungsgemäßen Erfassungsvorrichtung für die Rotorlage.

Die Figur 2 zeigt schematisch ein Blockschaltbild für einen elektronisch kommutierten Elektromotor, insbesondere für einen geschalteten Reluktanzmotor mit einer Vorrichtung zur Rotorlage-, Drehzahl- und/oder der Drehrichtungserfassung. Hierbei sind drei als magnetfeld sensitive Elemente ausgebildete Sensoren 25,27,29 vorgesehen, welche zur Erfassung von rotorlageabhängigen Schwankungen des magnetischen Flusses am Ständer des Motors angebracht sind. Diese Sensoren 25,27, 29 sind über zwei Leitungen 31,33 mit der positiven Klemme 35 und der negativen Klemme 37 einer Spannungsquelle zur Einspeisung der Versorgungsspannung verbunden. Die Versorgungsleitung weist auf der Versorgungsseite der Sensoren 25,27,29 einen Strommeßwiderstand 39 auf, der mit einem A/D-Wandler 41 zur Umwandlung des Spannungssignales in einen Binär- oder Dezimalcode verbunden ist.

Um die Spannungswerte am Strommeßwiderstand auf den Meßbereich abzugleichen, kann auch noch ein Verstärker zwischen dem Meßwiderstand 39 und dem A/D-Wandler 41 angeordnet sein.

Jeder Sensor 25.27,29 ist ausgangsseitig einerseits über eine Zuleitung 43,45,47 und andererseits über einen Widerstand 49,51,53 mit der Versorgungsleitung 31 zu der Spannungsquelle verbunden. Die Sensoren 25,27,29 sind gemäß Figur 2 parallel zueinander angeordnet und weisen unterschiedliche Widerstandswerte auf. So hat der dem ersten Sensor 25 zugeordnete Widerstand 49 einen Widerstanswert R , während die Widerstände zu den Sensoren 27,29 Widerstandswerte von nxR aufweisen, wobei n aus den ganzzahligen Zahlenwerten 1,2,3 .. besteht. Vorzugsweise haben der Widerstand 51 den Widerstandswert 2R und der Widerstand 53 den Wert 3R. Hierdurch entstehen in dem Sensor 25 ein Strom I, in dem Sensor 27 ein Strom I/2 und in dem Sensor 29 ein Strom I/3. Hierdurch ergibt sich, daß die Versorgungsleitungen 21,23 mit den drei Betriebsströmen und mit dem jeweils geschalteten Sensorstrom belastet werden. Da jeder Sensor 25,27,29 einen festen, unterschiedlichen Strom schaltet, lassen sich die Schaltzustände der Sensoren 25,27,29 aus dem Strom in der Versorgungsleitung erkennen.

Der A/D-Wandler 41 wird so eingestellt, daß er den Betriebsstrom der Sensoren 25,27,29 nicht erfasst. Dieses wird durch Einstellen eines unteren Referenzwertes in dem A/D-Wandler erzielt. Der obere Referenzwert ergibt sich aus der maximalen Differenzspannung der zu detektierenden Ströme plus dem unteren Referenzwert. Die Auflösung des A/D-Wandlers 41 muß mindestens der Anzahl der möglichen Codierungsmöglichkeiten entsprechen.

Die Erfindung ist nicht auf einen Elektromotor mit drei Sensoren beschränkt, sondern die Anzahl der Leitungen kann bei allen Elektromotoren mit mindestens einem sensitiven Element reduziert werden.

## Patentansprüche

1. Elektronisch kommutierter Elektromotor, insbesondere ein geschalteter Reluktanzmotor, mit einer Vorrichtung zur Rotorlage-, Drehzahl- und/oder Drehrichtungserfassung, die wenigstens einen magnetfeld sensitiven Sensor (25, 27, 29) aufweist, das zur Erfassung von rotorlageabhängigen Schwankungen des magnetischen Flusses am Ständer des Motors angebracht ist, wobei elektronische Mittel zur Auswertung der Sensorsignale vorgesehen sind, **dadurch gekennzeichnet, daß** der Sensor (25,27,29) über zwei Versorgungsleitungen (31,33) mit einer Spannungsquelle elektrisch verbunden sind und daß die Sensorsignale über die beiden Versorgungsleitungen (31,33) des Sensors (25,27,29) übertragbar sind.

2. Elektromotor nach Anspruch 1, **dadurch gekennzeichnet, daß** auf der Versorgungsseite der Sensoren (25,27,29) ein Strommeßwiderstand (39) angeordnet ist, der mit einem A/D-Wandler (41) zur Umwandlung des Spannungssignales in einen Binär- oder Dezimalcode verbunden ist.

3. Elektromotor nach Anspruch 2, **dadurch gekennzeichnet, daß** ein Verstärker zwischen dem Strommeßwiderstand (39) und dem A/D-Wandler (41) angeordnet ist.

4. Elektromotor nach Anspruch 2 oder 3, **dadurch gekennzeichnet, daß** jeder Sensor (25,27,29) ausgangsseitig einerseits über eine Zuleitung (43,45,47) und andererseits über einen Widerstand (49,51,53) mit der Versorgungsleitung zu der Stromquelle verbunden ist.

5. Elektromotor nach Anspruch 4, **dadurch gekennzeichnet, daß** die Sensoren (25,27,29) parallel zueinander angeordnet sind und daß die Widerstände (49,51,53) unterschiedliche Werte aufweisen.

6. Elektromotor nach Anspruch 5, **dadurch gekennzeichnet, daß** der dem ersten Sensor (25) zugeordnete Widerstand (49) einen Widerstandswert von R und die den Sensoren (27,29) zugeordneten Widerstände (51,53) Widerstandswerte von nxR haben, wobei n aus den ganzzahligen Zahlenwerten 1,2,3.. besteht.

7. Elektromotor nach Anspruch 6, **dadurch gekennzeichnet, daß** der dem zweiten Sensor (27) zugeordnete Widerstand (51) einen Widerstandswert von 2R und der dem dritten Sensor (29) zugeordnete Widerstand (53) einen Widerstandswert von 3R haben.

8. Elektromotor nach Anspruch 7, **dadurch gekennzeichnet, daß** der A/D-Wandler (41) so ausgebildet ist, daß er den Betriebsstrom für die Sensoren (25,27,29) nicht erfasst.

9. Elektromotor nach Anspruch 8, **dadurch gekennzeichnet, daß** der A/D-Wandler (41) einen unteren Referenzwert, durch den der Betriebsstrom der Sensoren (25,27,29) nicht erfassbar ist, und einen oberen Referenzwert aufweist, welcher sich aus der maximalen Differenzspannung der zu detektierenden Ströme plus dem unteren Referenzwert ergibt.

10. Elektromotor nach Anspruch 9, **dadurch gekennzeichnet, daß** die Auflösung des A/D-Wandlers (41) einen Wert aufweist, der mindestens der Anzahl der möglichen Codierungsmöglichkeiten entspricht.

11. Elektromotor nach einem der vorhergehenden Ansprüche, **dadurch gekennzeichnet, daß** die Sensoren (25,27,29) aus Hall-Sensoren bestehen.

## Claims

1. An electronically commutated electric motor, in particular, a switched reluctance motor, with a device for determining the rotor position, its rotational speed and/or its rotating direction, wherein said device contains at least one sensor (25, 27, 29) that is sensitive to magnetic fields and arranged on the stator of the motor in order to detect fluctuations in the magnetic flux which occur in dependence on the respective rotor position, and wherein electronic means for evaluating the sensor signals are provided, **characterized by** the fact that the sensor (25, 27, 29) is electrically connected to a voltage source via two supply lines (31, 33), and by the fact that the sensor signals can be transmitted via the two supply lines (31, 33) of the sensor (25, 27, 29).

2. The electric motor according to Claim 1, **characterized by** the fact that a shunt (39) is arranged on the supply side of the sensors (25, 27, 29), wherein said shunt is connected to an A/D converter (41) for converting the voltage signal into a binary or decimal code.

3. The electric motor according to Claim 2, **characterized by** the fact that an amplifier is arranged between the shunt (39) and the A/D converter (41).

4. The electric motor according to Claim 2 or 3, **characterized by** the fact that the output side of each sensor (25, 27, 29) is connected to the supply line leading to the power source via a feed line (43, 45, 47) on one hand and via a resistor (49, 51, 53) on the other hand.

5. The electric motor according to Claim 4, **characterized by** the fact that the sensors (25, 27, 29) are arranged parallel to one another, and by the fact that the resistors (49, 51, 53) have different values.

6. The electric motor according to Claim 5, **characterized by** the fact that the resistor (49) that is assigned to the first sensor (25) has a resistance value of R, and by the fact that the resistors (51, 53) that are assigned to the sensors (27, 29) have resistance values of nxR, wherein n represents the integral numerical values 1, 2, 3 ....

7. The electric motor according to Claim 6, **characterized by** the fact that the resistor (51) that is assigned to the second sensor (27) has a resistance value of 2R, and by the fact that the resistor (53) that is assigned to the third sensor (29) has a resistance value of 3R.

8. The electric motor according to Claim 7, **characterized by** the fact that the A/D converter (41) is realized such that it is insensitive to the operating current for the sensors (25, 27, 29).

9. The electric motor according to Claim 8, **characterized by** the fact that the A/D converter (41) has a lower reference value that is insensitive to the operating current of the sensors (25, 27, 29) and an upper reference value that results from the maximum differential voltage between the currents to be detected plus the lower reference value.

10. The electric motor according to Claim 9, **characterized by** the fact that the resolution of the A/D converter (41) has a value that at least corresponds to the number of possible coding options.

11. The electric motor according to one of the preceding claims, **characterized by** the fact that the sensors (25, 27, 29) consist of Hall sensors.

## Revendications

1. Moteur électrique commuté électroniquement, en particulier moteur à réluctance en circuit, comportant un dispositif pour la détection de la position du rotor, de la vitesse de rotation et/ou du sens de rotation, qui comporte au moins un capteur (25, 27, 29) qui est sensible au champ magnétique et qui est placé sur le stator du moteur, pour détecter les fluctuations du flux magnétique qui dépendent de la position du rotor, des moyens électroniques étant prévus pour évaluer les signaux des capteurs, **caractérisé en ce que** le capteur (25, 27, 29) est relié électriquement, par deux lignes d'alimentation (31, 33), à une source de tension et **en ce que** les signaux des capteurs peuvent être transmis par les deux lignes d'alimentation (31, 33) du capteur (25, 27, 29).

2. Moteur électrique selon la revendication 1, **caractérisé en ce qu'**il est disposé, sur le côté d'alimentation des capteurs (25, 27, 29), une résistance (39) de mesure du courant qui est reliée à un convertisseur analogique/numérique (41) pour la conversion du signal de tension en un code binaire ou décimal.

3. Moteur électrique selon la revendication 2, **caractérisé en ce qu'**un amplificateur est disposé entre la résistance (39) de mesure du courant et le convertisseur analogique/numérique (41).

4. Moteur électrique selon la revendication 2 ou 3, **caractérisé en ce que** chaque capteur (25, 27, 29) est relié côté sortie d'une part, par une ligne d'arrivée (43, 45, 47) et d'autre part, par une résistance (49, 51, 53), à la ligne d'alimentation menant à la source de courant.

5. Moteur électrique selon la revendication 4, **caractérisé en ce que** les capteurs (25, 27, 29) sont disposés parallèlement les uns aux autres et **en ce que** les résistances (49, 51, 53) présentent des valeurs différentes.

6. Moteur électrique selon la revendication 5, **caractérisé en ce que** la résistance (49), associée au premier capteur (25), a une valeur R, et les résistances (51, 53), associées aux capteurs (27, 29), ont des valeurs égales à nxR, n étant constitué des valeurs numériques entières (1, 2, 3....).

7. Moteur électrique selon la revendication 6, **caractérisé en ce que** la résistance (51 ) associée au deuxième capteur (27) a une valeur égale à 2R et la résistance (53), associée au troisième capteur (29), a une valeur égale à 3R.

8. Moteur électrique selon la revendication 7, **caractérisé en ce que** le convertisseur analogique/numérique (41) est conçu de manière qu'il ne détecte pas le courant de service des capteurs (25, 27, 29).

9. Moteur électrique selon la revendication 8, **caractérisé en ce que** le convertisseur analogique/numérique (41) présente une valeur de référence basse, par laquelle le courant de service des capteurs (25, 27, 29) ne peut être détecté, et une valeur de référence haute qui résulte de la tension différentielle maximale des courants à détecter, augmentée de la valeur de référence basse.

10. Moteur électrique selon la revendication 9, **caractérisé en ce que** la résolution du convertisseur analogique/numérique (41) présente une valeur qui correspond au moins au nombre de possibilités de codage.

11. Moteur électrique selon l'une des revendications précédentes, **caractérisé en ce que** les capteurs (25, 27, 29) sont constitués de capteurs de Hall.
